# EUROPÄISCHE PATENTSCHRIFT

(11) **EP 2 583 862 B1**
(45) Veröffentlichungstag und Bekanntmachung des Hinweises auf die Patenterteilung: **25.05.2016**
(21) Anmeldenummer: 12183504.5
(22) Anmeldetag: 07.09.2012
(51) Int. Cl.: B60N 2/58, B60N 2/60, B60N 2/70, B60N 2/68

(54) **Fahrzeugsitz, insbesondere Schienenfahrzeugsitz, mit einem Polsterelementbefestigungsrahmen**
Vehicle seat, in particular rail vehicle seat, with an upholstery element fixing frame
Siège de véhicule, en particulier siège de véhicule sur rail, avec un cadre de fixation d'un élément de rembourrage

(30) Priorität: 17.10.2011 DE 102011054530; 11.11.2011 DE 102011055286
(43) Veröffentlichungstag der Anmeldung: 24.04.2013
(73) Patentinhaber: GRAMMER AG, 92224 Amberg (DE)
(72) Erfinder: Götz, Manfred, 92245 Kümmersbruck (DE); Hägler, Thomas, 92533 Wernberg-Köblitz (DE); Schneider, Franz, 92318 Neumarkt (DE)
(74) Vertreter: Hannke, Christian

(56) Entgegenhaltungen:
- DE-A1- 3 629 883
- DE-A1- 19 902 379
- DE-T2- 69 914 161
- US-A- 6 027 171
- US-A1- 2011 121 624

## Beschreibung

Die Erfindung betrifft einen Fahrzeugsitz, insbesondere einen Schienenfahrzeugsitz, mit einem Sitzteil und einer Rückenlehne gemäß dem Oberbegriff des Patentanspruches 1.

Bei Fahrzeugsitzen, insbesondere bei Fahrzeugsitzen für Schienenwaggons, ist es vorrangig bei einfachen derartigen Bahnsitzen üblich, dass vorgefertigte Polsterelemente einfach in eine Rückenlehnenschale oder auch in eine Sitzschale eingesetzt werden und hierdurch von dieser Schale umgeben werden. Zwar ergibt sich hieraus eine Gesamtkonstruktion, bei der das Polsterelement schützend von der Schale umgeben wird. Es kann jedoch nicht ermöglicht werden, dass der Bezugstoff des Polsterelementes an den Seitenflächen des Fahrzeugsitzes, insbesondere an den Seitenflächen der Rückenlehne, außenseitig zum Vorschein kommt, da in diesem Bereich zwingend die Rückenlehnenschale vorhanden sein muss.

Außerdem ist die Rückenlehnenschale bei einem derartigen Fahrzeugsitz Stößen und Gefahren der Beschädigung ausgesetzt, da diese außenseitig nicht von einem Polstermaterial, zumindest von dem Bezugstoff des Polsterelementes, umgeben wird.

Als weiteres Problem ergibt sich bei derartigen herkömmlichen Fahrzeugsitzen, die ein in die Schale eingesetztes Polsterelement aufweisen, dass Verunreinigungen in dem Spalt zwischen dem Polsterelement und dem Schalenelement sich ablagern können und somit zunächst ein Entfernen des Polsterelementes notwendig ist, um eine Reinigung des Fahrzeugsitzes durchzuführen. nächst ein Entfernen des Polsterelementes notwendig ist, um eine Reinigung des Fahrzeugsitzes durchzuführen.

US 6 027 171 A offenbart einen gattungsgemässen Fahrzeugsitz, wobei der Sitz auf verschiedene
Fahrzeuggrößen einstellbar sein soll. Die Veränderung der Größe wird über verschiedene Blasen realisiert, die an der Rückseite des Stützelements in dafür vorgesehenen Kanälen angebracht sind. Wenn sich die Blasen ausdehnen, werden die Seitenelemente des Polsters nach innen gedrückt. Zudem weist das Stützelement auf seiner Rückseite Verbindungselemente auf, welche in die dafür vorgesehenen Aussparungen des Grundrahmens eingehakt werden. Außerdem wird der Sitzbezug mithilfe der Elemente in den dafür vorgesehenen Haken am Stützelement angebracht.
US 2011/121624 A1 beschreibt einen Fahrzeugsitz, wobei der Sitz aus einer Polstereinheit, einer Rückenlehne, einem Rückenlehnenträger, an welchem Abdeckungen angebracht werden und einer Rückenlehnenstütze, welche aus einem Rückenlehnenrahmen und einer Rahmenabdeckung besteht, besteht. Die Verstellung der Rückenlehne wird über zwei Steuereinheiten realisiert. Diese Steuereinheiten reagieren auf die jeweilige Kraft, die auf den Sitz einwirkt. Je nach Krafteinwirkung passt sich die Rückenlehne dem Rücken des Fahrgastes an. Das verformbare Rückenteil wird mit an den Winkelprofilen angebrachten Kerben an der oberen Steuereinheit befestigt und die unteren Halterungen werden mit der unteren Steuereinheit verbunden. Nach der Verbindung der Rückenlehne mit dem Rückenlehnenträger werden diese mit der Rückenlehnenstütze derart verbunden, dass sich die Rückenlehne relativ zu dem Rückenlehnenrahmen bewegen kann.
Demzufolge liegt der vorliegenden Erfindung die Aufgabe zugrunde, einen Fahrzeugsitz, insbesondere einen Sitz für Bahn- bzw. Schienenwaggons zur Verfügung zu stellen, bei dem ein schnelles Auswechseln eines Polsterelementes unter Erhalten eines an dem Schalenelement zumindest teilweise außenseitig angeordneten Bezugstoffes des Polsterelementes zur Verfügung zu stellen, wobei die Gefahr der Ablagerung von Verunreinigungen verringert werden soll.
Diese Aufgabe wird gemäß den Merkmalen des Patentanspruches 1 gelöst.

Ein wesentlicher Punkt der Erfindung liegt darin, dass bei einem Fahrzeugsitz, wie er insbesondere für Schienenfahrzeuge bzw. Schienenwaggons eingesetzt werden kann, mit einem Sitzteil und einer Rückenlehne zumindest die Rückenlehne zwischen einem Grundrahmen und einem Rückenpolsterelement einen für die Befestigung des Rückenpolsterelementes an den Grundrahmen vorgesehenen Befestigungsrahmen aufweist, der von dem Grundrahmen lösbar ist, wobei das Rückenpolsterelement einen Bezugstoff aufweist, welcher um stegartige Vorsprünge des Befestigungsrahmens und an die stegartigen Vorsprünge anlegbar und im Zusammenspiel mit einem weiteren Vorsprung des Grundrahmens einklemmbar ist. Ein derartiger Befestigungsrahmen kann als Einsetzrahmen für das Polsterelement bzw. als Aufnahmeelement für das Polsterelement dienen und sich zumindest teilweise über die Außenseiten, insbesondere die seitlichen Außenseiten eines Schalenelementes, welches auch als Grundrahmen ausgebildet sein kann oder zumindest mit diesem verbunden ist, erstrecken. Auf diese Weise ist es möglich, dass nicht nur ein Bezugstoff des Polsterelementes auch seitlich außen vorliegt, sondern auch zugleich die Gefahr von Verunreinigungen ansonsten zwischen einem eingesetzten Polsterelement und einem Schalenelement auftretenden Spalt vermindert wird. Zudem besteht ein erhöhter Kantenschutz für das Schalenelement des Fahrzeugsitzes.

Bevorzugt ist der Befestigungsrahmen derart gestaltet, dass er zumindest einen Außenrahmenanteil aufweist, der entlang des Bereiches des Außenrandes des Rückenpolsterelementes und entlang einer Außenseite eines Außenrandprofiles des Grundrahmens verläuft.

Selbstverständlich kann dieser Außenrahmenanteil auch zusätzlich noch an der Innenseite des Grundrahmens, welcher dann schalenartig ausgebildet wäre, verlaufen. Durch die zur-Verfügung-Stellung eines derartigen Außenrahmenanteiles ist das Einsetzen des Polsterelementes und eine stabile Lagerung des Polsterelementes gegenüber dem Grundgestell möglich.

Gemäß einer bevorzugten Ausführungsform weist der Außenrahmenanteil randseitig die stegartigen Vorsprünge auf, die über die gesamte Länge des Außenrahmenanteils verteilt sein können und die in geschlossenem Zustand das randseitige Befestigen eines Bezugstoffes des Rückenpolsterelementes derart ermöglichen, dass es den Außenrahmenanteil außenseitig zumindest teilweise umspannt. Somit wird auf vorteilhafte Weise erreicht, dass der Bezugstoff auch randseitig, also an den außen liegenden Seitenflächen des Befestigungsrahmens und damit der gesamten Rückenlehne angeordnet ist und mittels derartiger Vorsprünge für eine Befestigung des Polsterelementes zusätzlich zu weiteren Befestigungsteilen dient. Zudem wird hierdurch zuverlässig eine Straffung des Bezugstoffes an der Oberfläche des Polsterelementes sichergestellt.

Gemäß einer bevorzugten Ausführungsform sind die stegartigen Vorsprünge auslenkbar, um die der Bezugsstoff herumgelegt werden kann und der gegen einen Vorsprung, der an dem Grundrahmen befestigt ist, bei Aufdrücken des Befestigungsrahmens auf den Grundrahmen oder auf ein separates Profil, welches zusätzlicher Bestandteil des Befestigungsrahmens ist, automatisiert gespannt wird.
Der Befestigungsrahmen ist vorzugsweise mit Durchgangslöchern ausgebildet, um an einer Rückseite des Rückenpolsterelementes angebrachte Zapfenelemente oder clipsartige Elemente, die in entsprechende Ausnehmungen des Grundrahmens einklicken bzw. eingreifen können. Alternativ können die Zapfenelemente bzw. clipsartigen Elemente an dem Befestigungsrahmen befestigt sein, um dann in den Grundrahmen eingreifen zu können. Dies ermöglicht eine schnelle und unkomplizierte Befestigung des Befestigungsrahmens zusammen mit dem Rückenpolsterelement auf den Grundrahmen.
hindurchzustecken und in dahinterliegende schlüssellochförmige Ausnehmungen des Grundrahmens für eine Arretierung des Rückenpolsterelementes den Grundrahmen einzuführen. Dies ermöglicht eine Arretierung des Polsterelementes an dem eigentlichen Rückenrahmen, der auch als Schalenelement ausgebildet sein kann oder mit diesem verbunden sein kann, ohne dass hierbei der Befestigungsrahmen für das Polsterelement hinderlich ist.
Eine Ausbildung einer schlüssellochförmigen Ausnehmung und eine Aufnahme eines vorzugsweise pilzförmigen Zapfens ermöglichen, sofern derartige Ausnehmungen an mehreren Stellen, vorzugsweise im Randbereich des Grundrahmens, angebracht sind, ein schnelles Einsetzen und Herausnehmen der Polsterelementes und zugleich des Befestigungsrahmens, der zum Arretieren des Bezugstoffes dient.

Der Befestigungsrahmen weist zwischen links- und rechtsseitig angeordneten Abschnitten des Außenrahmenanteils mindestens eine endseitig damit verbundene Querstrebe auf. Diese Querstrebe, wobei vorzugsweise mindestens drei Querstreben angeordnet werden, ist zu Stabilisierungszwecken und zu Stützzwecken des Polsterelementes, wenn dieses im Befestigungsrahmen eingesetzt ist, vorgesehen.

Derartige Querstreben können zusätzlich mit vertikal verlaufenden Streben innerhalb des Befestigungsrahmens verbunden sein, um bei Vorliegen zahlreicher Streben sogar eine gitterförmige Struktur zu erhalten. Selbstverständlich kann anstelle dessen als Ersatz ein Gitter in Form eines Geflechts oder dergleichen zwischen den Abschnitten des Außenrahmenanteils eingesetzt sein.

Der Außenrahmenanteil weist an den links- und rechtsseitig angeordneten Abschnitten lösbare Teilabschnitte auf, um Arretierungselemente für nachträglich anzubringende Anbauteile, wie Armlehnen, im Befestigungsrahmen aufzunehmen und am Grundrahmen zu befestigen. Derartige Teilabschnitte können im einfachsten Fall aus einer Kunststoffoberfläche herausdrückbare Flächenelemente sein, die während des Spritzvorganges des aus einem Kunststoffmaterial hergestellten Befestigungsrahmens mit einem dünneren Randbereich in den Befestigungsrahmen integriert gespritzt worden sind. Ein derartiger Befestigungsrahmen kann demzufolge bevorzugt aus Kunststoffmaterial hergestellt werden.
Weitere vorteilshafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer perspektivischen Darstellung einen Bahnsitz gemäß einer Ausführungsform der Erfindung;
- Fig. 2: in einer Explosionsdarstellung die einzelnen Teile des erfindungsgemäßen Bahnsitzes;
- Fig. 3: Teile einer Rückenlehne des erfindungsgemäßen Bahnsitzes, nämlich ein Polsterelement und einen Befestigunsrahmen;
- Fig. 4: einen Befestigungsrahmen für einen erfindungsgemäßen Bahnsitz bzw. Fahrzeugsitz;
- Fig. 5: einen Ausschnitt des Befestigungsrahmens für einen erfindungsgemäßen Fahrzeugsitz;
- Fig. 6: in einer Querschnittsdarstellung (horizontal verlaufender Querschnitt) einen Ausschnitt des Befestigungsrahmens mit einer ersten erfindungsgemäßen Befestigungsvariante;
- Fig. 7: in einer Querschnittsdarstellung (horizontal verlaufender Querschnitt) einen Ausschnitt des Befestigungsrahmens und des Grundrahmens mit einer zweiten erfindungsgemäßen Befestigungsvariante;
- Fig. 8: in einer Übersichtsdarstellung die in Fig. 6 und Fig. 7 wiedergegebenen Befestigungsvarianten;
- Fig. 9: in einer Querschnittsdarstellung (zum Beispiel horizontal verlaufender Querschnitt) einen Ausschnitt des Befestigungsrahmens zusammen mit dem Grundrahmen einschließlich eines Hakenprofilelementes für die Befestigung des Bezugsstoffes;
- Fig.10: einen Grundrahmen für einen erfindungsgemäßen Fahrzeugsitz;
- Fig.11: einen Ausschnitt für einen Grundrahmen des erfindungsgemäßen Fahrzeugsitzes.

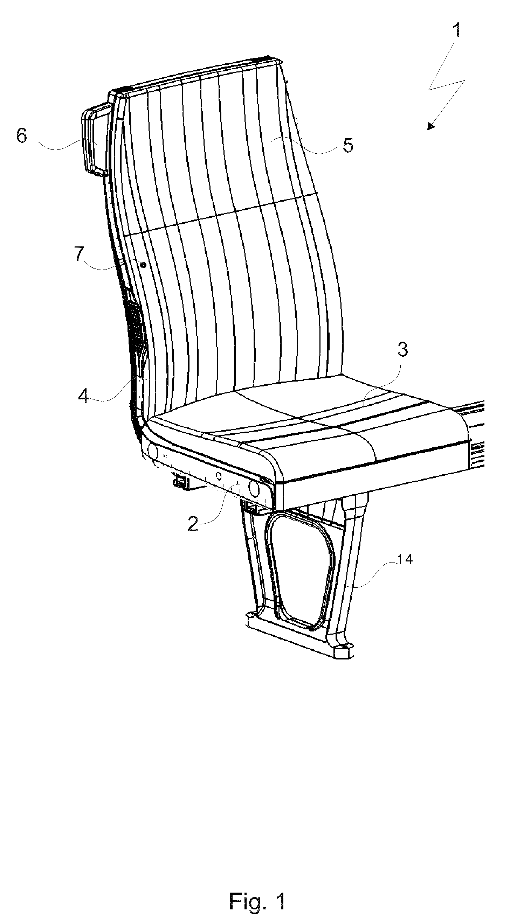

In Fig. 1 ist in einer perspektivischen Darstellung ein Fahrzeugsitz, nämlich ein Bahnsitz 1 gemäß einer Ausführungsform der Erfindung wiedergegeben. Ein derartiger Bahnsitz weist einen Sitzteilgrundrahmen 2, der eine gemeinsame Einheit mit dem für die Rückenlehne vorgesehenen Grundrahmen bilden kann, auf. Zusätzlich ist ein Sitzteilpolsterelement 3 zu sehen.

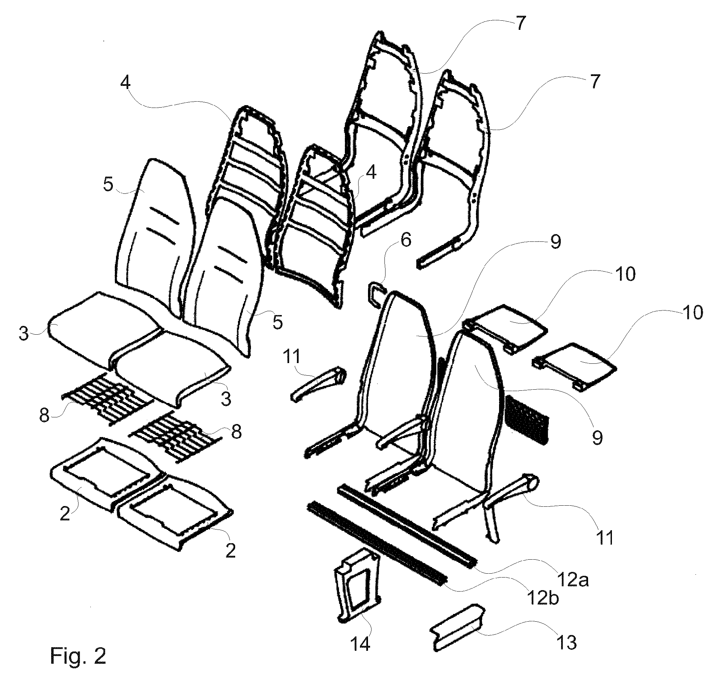

Ein Grundrahmen 7 der Rückenlehne kann ein gemeinsames Element mit dem Grundrahmen 2 des Sitzteiles bilden, wie es im Übrigen in Fig. 2 wiedergegeben ist.

Zusätzlich ist ein Rückenpolsterelement 5 auf dem Grundrahmen angeordnet, wobei zusätzlich ein seitlich angebrachter Griff 6 im Schulterbereich zu sehen ist.

In Fig. 2 wird in einer Explosionsdarstellung eine Mehrzahl an Teilen des erfindungsgemäßen Fahrzeugsitzes bzw. Bahnsitzes gemäß der Ausführungsform der Erfindung gezeigt.

Der Darstellung ist deutlich zu entnehmen, dass der Grundrahmen 7 im Rückenlehnenbereich, also im Sitzteilbereich, eine gemeinsame Einheit bildet, also in einem Winkel nach vorne sich beidseitig auf Höhe des Sitzteiles erstreckt und zugleich im Rückenlehnenbereich oberseitig geschlossen ist.

Ebenso ist dieser Darstellung deutlich zu entnehmen, dass ein Befestigungsrahmen 4, der ähnlich groß ausgebildet ist wie der Rahmen 7, in jeweils einem Polsterelement 5 und jeweils einem Grundrahmen 7 angeordnet ist. Dieser Befestigungsrahmen 4 dient zur Aufnahme des Polsterelementes 5 und zum Aufstecken der Einheit aus dem Polsterelement und dem Befestigungsrahmen 4 auf dem Grundrahmen 7 oder zum anfänglichen Aufsetzen des Befestigungsrahmens 4 auf den Grundrahmen 7 und zum anschließenden Einsetzen des Polsterelementes 5.

Zusätzlich sind Rückenwandelemente, die schalenförmig ausgebildet sein können, mit dem Bezugszeichen 9 dargestellt, wobei an der Rückseite derartiger Rückenwandelemente 9 zusätzlich aufklappbare Tische 10 vorhanden sein können.

Links- und rechtsseitig von derartigen erfindungsgemäßen Bahnsitzen können Armlehnen 11 angebracht sein.

Das Sitzteil besteht im Wesentlichen aus ebenso einem Sitzpolsterelement 3, einem darunter angeordneten federnden flachen Bauteil 8 sowie einem zur stabilen Aufnahme des Sitzpolsterteils vorgesehenen Sitzteilrahmen 2.

Jeweils zwei Bahnsitze sind auf einfache Art und Weise auf zwei quer verlaufenden, hintereinander angeordneten Schienen (12a, 12b) angebracht und gegenüber einem hier nicht näher dargestellten Waggonwandelement mit einem Winkeleisen 13 abgestützt. Auf der Innenseite hingegen sind die beiden Schienen (12a, 12b) auf einen Bahnsitzfuß 14 aufgelegt.

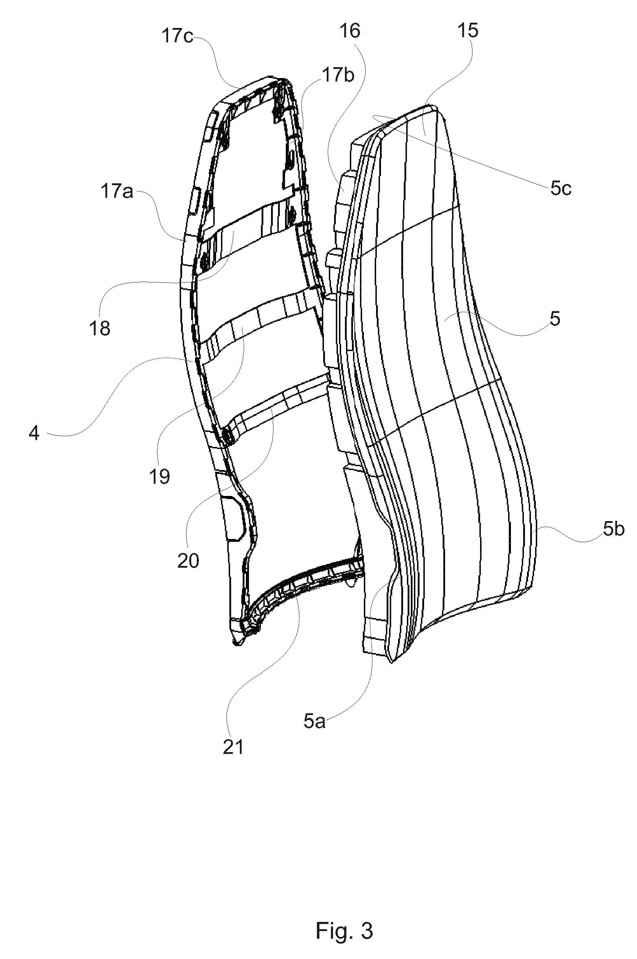

In Fig. 3 werden in einer Darstellung Teile der Rückenlehne des erfindungsgemäßen Bahnsitzes bzw. Fahrzeugsitzes wiedergegeben. Im Wesentlichen umfassen diese Teile das Polsterelement 5 mit einer Hinterschäumung 16, die im Befestigungsrahmen 4 eingelegt werden kann. Zudem ist der Befestigungsrahmen 4 vorhanden, der aus den Außenrahmenanteilen (17a, 17b) und den oberseitigen Anteilsitzen (17c), sowie aus Querstreben (18, 19 und 20, sowie 21) bestehen kann, wobei die Querstreben von links nach rechts, also von dem linken Außenrahmenanteil (17b) zu dem rechten Außenrahmenanteil (17a), sich erstrecken und mit diesen entweder in einem Stück als Kunststoffelement gespritzt worden sind oder nachträglich mit Befestigungselementen, wie Schrauben oder dergleichen, an den Außenrahmenanteilen befestigt werden.

Ein Bezugstoff 15, der oberseitig auf der Hinterschäumung 16 angebracht ist, kann mit dem Befestigungsrahmen 4 verbunden und an diesem befestigt werden, wie später gezeigt wird.

Die Außenseiten (5a, 5b und 5c) des Polsterelementes verlaufen entlang dem Außenrahmenanteil (17a, 17b und 17c) des Befestigungsrahmens 4.

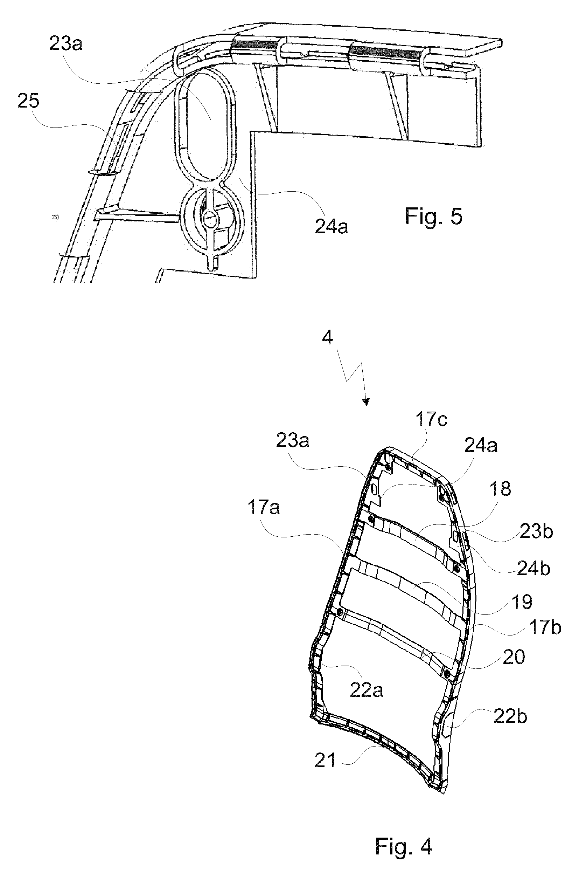

In Fig. 4 ist der Befestigungsrahmen 4 nochmals im Detail gezeigt. Dieser Darstellung ist deutlich zu entnehmen, dass der Befestigungsrahmen 4 die gewünschte Form einer Rückenlehne, die zu hohem Sitzkomfort beitragen soll, aufweist. Hierfür sind die Querstreben (18,19,20 und 21) konvex ausgebildet und der Außenrahmenanteil auf der linken und rechten Seite (17a, 17b) nach hinten geneigt. Hierzu ist der Außenrahmenanteil 17c im oberen Kopfbereich wieder leicht nach vorne zur Abstützung des Kopfes eines den Sitz benutzenden Passagiers geneigt.

Zusätzlich weist der Befestigungsrahmen 4 nachträglich herausziehbare Kunststoffelemente (22a, 22b) auf, die beispielsweise auf der Höhe einer später einzubauenden Armlehne angeordnet sein können. Auf diese Weise kann einfach und schnell eine Armlehne an einem derartigen Bahnsitz montiert werden, indem die herausreichenden Kunststoffflächenelemente (22a und 22b) entfernt werden und die Armlehnen mit Schrauben an den darunterliegenden Gewindelöchern, die in dem Grundrahmen 7 angeordnet sind, befestigt werden.

Zusätzlich ist der Befestigungsrahmen 4 an verschiedenen Stellen, hier beispielsweise im oberen Bereich links- und rechtsseitig mit flächigen Elementen (24a und 24b) ausgestattet, in denen Durchgangslöcher bzw. die Ausnehmungen 23a und 23b angeordnet sind.

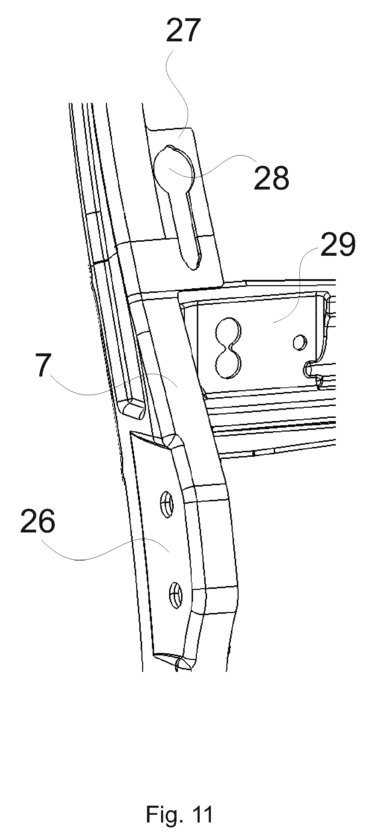

Wie aus der in Fig. 5 wiedergegebenen Detailansicht zu entnehmen ist, sind die Durchgangsbohrungen bzw. Durchgangsausnehmungen 23a in diesem Fall oval gestaltet, so dass zapfenartige Elemente, die pilzförmig beispielsweise ausgestaltet sein können, dort nur hindurchgesteckt werden müssen und in schlüsselförmige Löcher bzw. Ausnehmungen, wie sie in Fig. 11 gemäß dem Bezugszeichen 28 in einem Grundrahmen angeordneten Element 27 gezeigt werden, eingreifen können. Auf diese Art können die pilzförmigen Zapfenelemente in die schlüssellochförmigen Ausnehmungen 28 eingesetzt und nach unten gezogen werden, so dass eine zuverlässige Arretierung des Polsterelementes gegenüber dem Grundrahmen und auch gegenüber dem Befestigungsrahmen vorliegt.

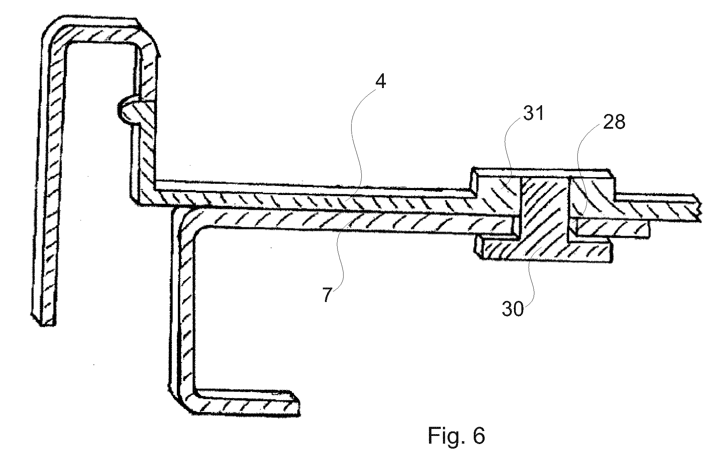

Alternativ kann in dem Befestigungsrahmen 4 das pilzförmige Zapfenelement fest angeordnet sein, ohne dass hierfür Durchgangsausnehmungen 23a bereitgestellt werden. Dies wird in Fig. 6 dargestellt.

Gemäß Fig. 6 weist der Befestigungsrahmen 4 einen dickeren Abschnitt 31, in dem ein Zapfenelement 30 fest angeordnet ist, auf. Das Zapfenelement 30 ist dafür vorgesehen, in der Öffnung 28, die eine Ausnehmung ohne Schlüsselloch darstellen kann, einzugreifen, wobei der Kopf des zapfenförmigen Elementes flexibel ausgebildet sein kann, sodass er durch die Öffnung 28 hindurchgedrückt werden kann. Im Falle der Verwendung einer schlüssellochförmigen Ausnehmung 28 ist eine flexible Ausbildung des Zapfenelementes 30 nicht notwendig.

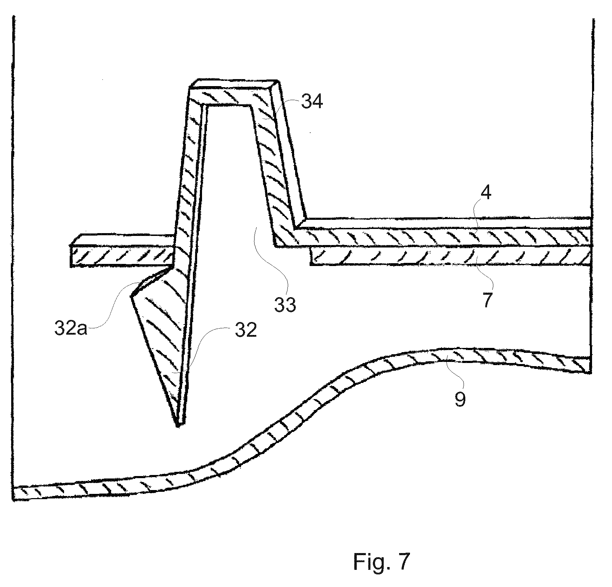

In Fig. 7 ist eine weitere Variante für eine Befestigung des Befestigungsrahmens 4 an dem Grundrahmen 7 gezeigt. Gemäß dieser Befestigungsvariante sind keine Zapfenelemente vorgesehen, sondern vielmehr clipsartige Vorsprünge 32, die in eine Ausnehmung bzw. eine Bohrung 33 des Grundrahmens 7 eingreifen können. Die clipsartigen Vorsprünge 32 sind mittels eines entgegengesetzt verlaufenden Bogens 34 an dem Befestigungsrahmen 4 befestigt, bzw. bilden mit diesem Befestigungsrahmen 4 eine integrale Einheit. Sobald der Befestigungsrahmen 4 auf die Ausnehmungen 33 zubewegt wird und damit auf den Grundrahmen 7 zubewegt wird, kann auf einfache Art und Weise durch Einclipsen eine seitliche Clipsfläche 32a hinter einen Abschnitt des Grundrahmens 7 der Befestigungsrahmen schnell mit dem Grundrahmen befestigt werden.

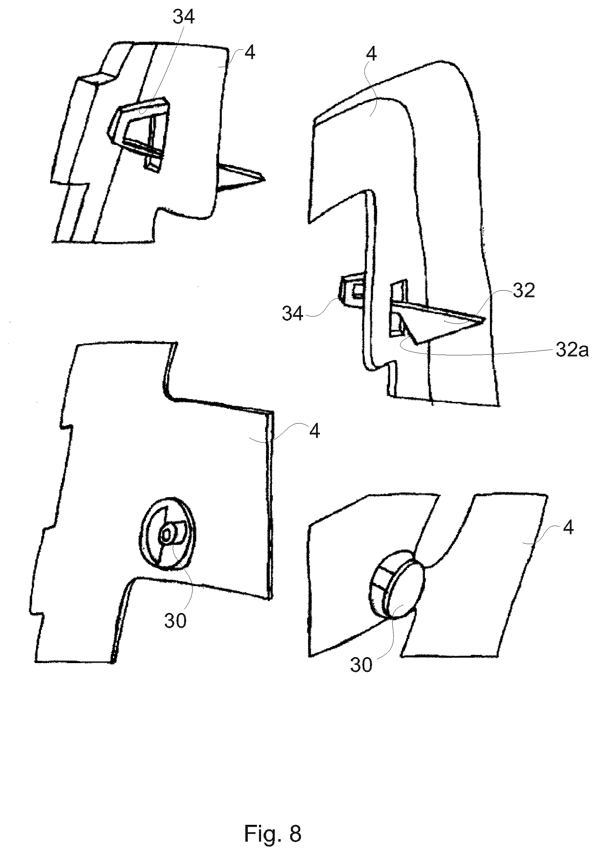

In Fig. 8 wird lediglich ein Ausschnitt des Fahrzeugsitzes gezeigt, wobei das Bezugszeichen 9 ein schalenförmiges Rückenwandelement darstellt.
Zusätzlich ist gemäß dem Bezugszeichen 25 in Fig. 5 ein Hakenprofilelement angeordnet, welches gemäss der Erfindung der stegartige Vorsprung 36 ist, und sich wiederholend über die gesamte Strecke des Außenrahmenanteils des Befestigungsrahmens verteilt sein kann. Derartige Hakenprofilelemente dienen dazu, den Bezugstoff 15 des Polsterelementes randseitig zu befestigen und tragen damit auch zu einer Aufrechterhaltung der Spannung des Polsterstoffes bei. So ist auf diese Art und Weise der Bezugstoff unabhängig von dem Hinterschaummaterial auf schnelle Art auszuwechseln ohne dass hierfür das gesamte Polsterelement ausgewechselt werden muss.

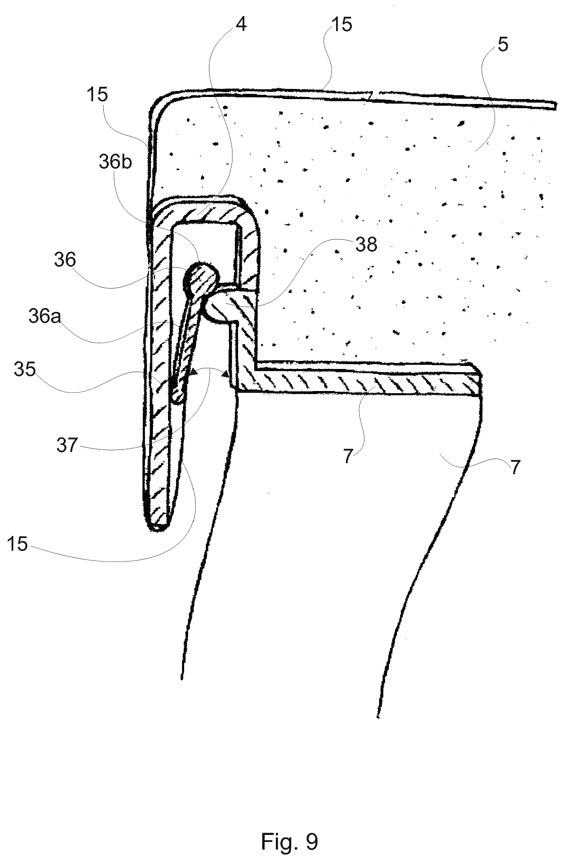

In Fig. 9 wird in einer Querschnittsdarstellung, die entlang eines horizontal gelegten Schnittes durch den Befestigungsrahmen 4 hindurch verläuft, ausschnittsweise das Hakenprofilelement im Zusammenspiel mit dem Befestigungsrahmen näher dargestellt.
Dieser Darstellung ist zu entnehmen, dass der Bezugstoff 15, der auf dem Rückenpolsterelement 5 und gegebenenfalls einem Kopfpolsterelement verläuft, sich außenseitig um Teile 35 des Befestigungsrahmens 4 herum bewegen und an der hinteren Kante des Teiles 35 nahezu um 180° umgelenkt werden. Der Bezugstoff 15 wird dann anschließend über ein Hakenprofilelement 36 gelegt, welches aus einem Steg 36a und einem Kopfelement 36b besteht. Dieses Hakenprofilelement 36 ist schwenkbar, bzw. flexibel an dem Teil 35 des Befestigungsrahmens 4 angeordnet, sodass es nach links und rechts - in Bildebene betrachtet - schwenken kann, wie es durch den Doppelpfeil 27 gezeigt wird.

Sobald das Hakenprofilelement 36 mit dem darübergelegten Bezugstoff 15 zusammen mit dem Befestigungsrahmen 4 auf den Grundrahmen 7 geschoben wird, welches - in Bildebene betrachtet - eine Bewegung von oben nach unten bedeutet, wird der Bezugstoff 15 durch einen Vorsprung 38, der an dem Grundrahmen 7 befestigt ist, durch die stattfindenden Reibungskräfte automatisch auf Spannung gezogen und zwischen dem Vorsprung 38 und dem Kopfteil 36b des Hakenprofilelementes 36 eingespannt bzw. eingeklemmt. Dieser Vorgang ermöglicht eine schnelle, unkomplizierte Befestigung des Bezugstoffes 15 unter Beibehaltung einer Spannung des Bezugsstoffes und einer außenseitigen Randabdeckung des Fahrzeugsitzes im Bereich 35.

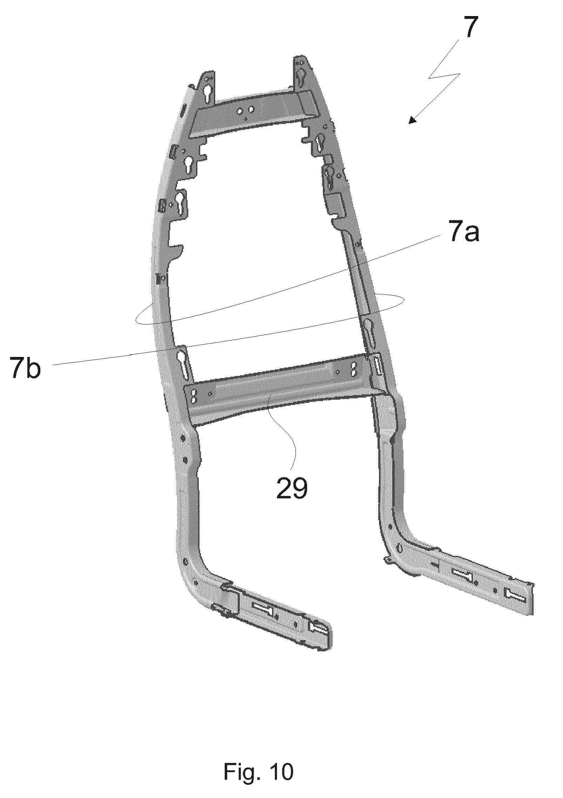

In Fig. 10 ist nochmal eine Gesamtansicht des Grundrahmens 7 gegeben. Dieser Darstellung ist deutlich zu entnehmen, dass sowohl für den Sitzbereich als auch für den Rückenlehnenbereich ein gemeinsamer Grundrahmen existiert. Dieser Grundrahmen weist links- und rechtsseitig Teile des Außenrandprofils (7a und 7b) auf, welches einen seitlich angebrachten Bezugstoff ermöglicht.
Der Grundrahmen 7 weist zusätzlich Querstreben 29 auf, die in beliebiger Höhe angeordnet sein können. Idealerweise ist eine Querstrebe im mittleren Bereich und eine Querstrebe im oberen Bereich zur Stabilisierung des gesamten Grundrahmens angeordnet. Diese Querstrebe 29 kann endseitig, entweder mit gesonderten Verbindungen, wie Schraubverbindungen, Nieten, Schweißverbindungen oder dergleichen, an den Außenrandprofilen 7a und 7b befestigt sein oder einteilig mit diesen Außenrandprofilen 7a und 7b ausgebildet sein.

### Bezugszeichenliste

- 1: Bahnsitz
- 2: Sitzteilgrundrahmen
- 3: Sitzteilpolsterelement
- 4: Befestigungsrahmen
- 5: Rückenpolsterelement
- 5a: Außenseite
- 5b: Außenseite
- 5c: Außenseite
- 6: Griff (angebracht im Schulterbereich)
- 7: Grundrahmen
- 7a: Außenrandprofil
- 7b: Außenrandprofil
- 8: flaches federndes Bauteil
- 9: Rückenwandelemente (schalenförmig ausgebildet)
- 10: aufklappbare Tische
- 11: Armlehnen
- 12a: Schienen
- 12b: Schienen
- 13: Winkeleisen
- 14: Bahnsitzfuß
- 15: Bezugstoff
- 16: Hinterschäumung
- 17a: Außenrahmenanteil
- 17b: Außenrahmenanteil
- 17c: Anteilsitze/Au ßenrahmenanteil
- 18: Querstreben
- 19: Querstreben
- 20: Querstreben
- 21: Querstreben
- 22a: Kunststoffflächenelement
- 22b: Kunststoffflächenelement
- 23a: Durchgangsbohrungen/-flächen/-löcher, Ausnehmungen
- 23b: Durchgangslöcher, Ausnehmungen
- 24a: flächiges Element
- 24b: flächiges Element
- 25: Hakenprofilelement
- 27: im Grundrahmen angeordnetes Element
- 28: schlüsselförmige Löcher bzw. Ausnehmungen
- 29: Querstreben
- 30: Zapfenelement
- 31: Abschnitt
- 32: clipsartige Vorsprünge
- 32a: Clipsfläche
- 33: Bohrung
- 34: Bogen
- 35: Teile des Befestigungsrahmens
- 36: Hakenprofilelement
- 36a: Steg
- 36b: Kopfelement
- 38: Vorsprung

## Patentansprüche

1. Fahrzeugsitz, insbesondere Schienenfahrzeugsitz, mit einem Sitzteil (2, 3) und einer Rückenlehne (4, 5),
wobei
zumindest die Rückenlehne (4, 5) zwischen einem Grundrahmen (7) und einem Rückenpolsterelement (5, 16) einen für die Befestigung des Rückenpolsterelementes (5, 16) an den Grundrahmen (7) vorgesehenen lösbaren Befestigungsrahmen (4), der von dem Grundrahmen (7) lösbar ist, aufweist,
**dadurch gekennzeichnet, dass**
das Rückenpolsterelement (5) einen Bezugstoff (15) aufweist, welcher um stegartige Vorsprünge (36) des Befestigungsrahmens (4) und an die stegartigen Vorsprünge (36) anlegbar und im Zusammenspiel mit einem weiteren Vorsprung (38) des Grundrahmens (7) einklemmbar ist.

2. Fahrzeugsitz nach Anspruch 1,
**dadurch gekennzeichnet, dass**
der Befestigungsrahmen (4) derart gestaltet ist, dass er zumindest einen Außenrahmenanteil (17a, 17b, 17c) aufweist, der entlang des Bereichs des Außenrandes (5a, 5b, 5c) des Rückenpolsterelementes (5, 16) und entlang eines Außenrandprofiles (7a, 7b) des Grundrahmens (7) verläuft.

3. Fahrzeugsitz nach Anspruch 2,
**dadurch gekennzeichnet,dass**
der Außenrahmenanteil (17a, 17b, 17c) randseitig die stegartigen Vorsprünge (36) über die
gesamte Länge des Außenrahmenanteils (17a-c) verteilt aufweist, die in geschlossenem Zustand das randseitige Befestigen des Bezugstoffes (15) des Rückenpolsterelementes (5, 16) derart ermöglichen, dass es in den Außenrahmenanteil (17a-c) außenseitig zumindest teilweise umspannt.

4. Fahrzeugsitz nach Anspruch 3,
**dadurch gekennzeichnet, dass**
die stegartigen Vorsprünge (36) schwenkbar ausgebildet sind.

5. Fahrzeugsitz nach Anspruch 3 oder 4,
**dadurch gekennzeichnet,dass** die stegartigen Vorsprünge (36) ein Stegelement (36a) und ein Kopfelement (36b) aufweisen.

6. Fahrzeugsitz nach einem der vorangegangenen Ansprüche,
**dadurch gekennzeichnet, dass**
der Befestigungsrahmen (4) Durchgangslöcher (23a) aufweist, um an einer Rückseite des Rückenpolsterelementes (5, 16) angebrachte Zapfenelemente (30) und/oder clipsartige Elemente (32) hindurchzustecken, und in dahinterliegende schlüssellochförmige Ausnehmungen (28, 33) des Grundrahmens (7) für eine Arretierung des Rückenpolsterelementes (5, 16) an den Grundrahmen (7) einzuführen.

7. Fahrzeugsitz nach einem der Ansprüche 2-6,
**dadurch gekennzeichnet, dass**
der Befestigungsrahmen (4) zwischen links- und rechtsseitig angeordneten Abschnitten (17a, 17b) des Außenrahmenanteils (17a-c) mindestens eine endseitig damit verbundene Querstrebe (18, 19, 20) aufweist.

8. Fahrzeugsitz nach einem der Ansprüche 2-7,
**dadurch gekennzeichnet, dass**
der Außenrahmenanteil (17a-c) zumindest an den links- und rechtsseitig angeordneten Abschnitten (17a, 17b) lösbare Teilabschnitte (22a, 22b) aufweist, um Arretierungselemente für nachträglich anzubringende Anbauteile, wie Armlehnen (11), in Befestigungsrahmen (4) aufzunehmen und am Grundrahmen (7) zu befestigen.

9. Fahrzeugsitz nach einem der vorangegangenen Ansprüche,
**dadurch gekennzeichnet, dass**
der Befestigungsrahmen (4) aus Kunststoffmaterial besteht.

## Claims

1. Vehicle seat, in particular a rail vehicle seat, comprising a seat part (2, 3) and a backrest (4, 5), at least the backrest (4, 5) comprising, between a base frame (7) and a backrest cushion element (5, 16), a detachable fastening frame (4), which can be detached from the base frame (7) and is provided for fastening the backrest cushion element (5, 16) to the base frame (7), **characterised in that** the backrest cushion element (5) comprises an upholstery fabric (15) which can be placed around rib-like projections (36) of the fastening frame (4) and placed on the rib-like projections (36) and can be clamped by interacting with an additional projection (38) of the base frame (7).

2. Vehicle seat according to claim 1, **characterised in that** the fastening frame (4) is designed to have at least one outer frame part (17a, 17b, 17c) which extends along the region of the outer edge (5a, 5b, 5c) of the backrest cushion element (5, 16) and along an outer edge profile (7a, 7b) of the base frame (7).

3. Vehicle seat according to claim 2, **characterised in that** the outer frame part (17a, 17b, 17c) comprises the rib-like projections (36) such that they are distributed over the entire length of the outer frame part (17a-c) at the edge thereof and, in the closed state, allow the upholstery fabric (15) of the backrest cushion element (5, 16) to be fastened at the edge such that said fabric envelopes the outside of the outer frame part (17a-c) at least in part.

4. Vehicle seat according to claim 3, **characterised in that** the rib-like projections (36) are pivotable.

5. Vehicle seat according to either claim 3 or claim 4, **characterised in that** the rib-like projections (36) comprise a rib element (36a) and a head element (36b).

6. Vehicle seat according to any of the preceding claims, **characterised in that** the fastening frame (4) comprises through-holes (23a) for passing through pin elements (30) and/or clip-like elements (32) attached to the back of the backrest cushion element (5, 16) and inserting said elements into keyhole-shaped recesses (28, 33) in the base frame (7) located behind said through-holes, in order to lock the backrest cushion element (5, 16) to the base frame (7).

7. Vehicle seat according to any of claims 2 to 6, **characterised in that**, between left-hand and right-hand portions (17a, 17b) of the outer frame part (17a-c), the fastening frame (4) comprises at least one transverse bar (18, 19, 20) connected to the end thereof.

8. Vehicle seat according to any of claims 2 to 7, **characterised in that** the outer frame part (17a-c) comprises detachable sub-portions (22a, 22b) at least on the left-hand and right-hand portions (17a, 17b) in order to receive locking elements for attachments, such as armrests (11), which are to be retrofitted, in the fastening frame (4) and to fasten them to the base frame (7).

9. Vehicle seat according to any of the preceding claims, **characterised in that** the fastening frame (4) is made of plastics material.

## Revendications

1. Siège de véhicule, en particulier siège de véhicule sur rail, avec une partie d'assise (2, 3) et un dossier (4, 5),
au moins le dossier (4, 5) comprenant, entre un châssis de base (7) et un élément de rembourrage arrière (5, 16), un châssis de fixation (4) amovible prévu pour la fixation de l'élément de rembourrage arrière (5, 16) au châssis de base (7), qui peut être détaché du châssis de base (7),
**caractérisé en ce que**
l'élément de rembourrage arrière (5) comprend un tissu de housse (15), qui peut être coincé autour de saillies (36), en forme de nervures, du châssis de fixation (4) et qui peut être appuyé contre sur les saillies (36) en forme de nervures et être serré en interaction avec une saillie supplémentaire (38) du châssis de base (7).

2. Siège de véhicule selon la revendication 1, **caractérisé en ce que** le châssis de fixation (4) est conçu de façon à ce qu'il comprenne au moins une partie de châssis externe (17a, 17b, 17c) qui s'étend le long du bord extérieur (5a, 5b, 5c) de l'élément de rembourrage arrière (5, 16) et le long d'un profil de bord extérieur (7a, 7b) du châssis de base (7).

3. Siège de véhicule selon la revendication 2, **caractérisé en ce que** la partie de châssis extérieur (17a, 17b, 17c) comprend, sur le bord, les saillies (36) en forme de nervures, réparties sur toute la longueur de la partie de châssis externe (17a-c), qui permettent, dans l'état fermé, la fixation, sur le bord, du tissu de housse (15) de l'élément de rembourrage arrière (5, 16), de façon à ce qu'il recouvre au moins l'extérieur de la partie de châssis externe (17a-c).

4. Siège de véhicule selon la revendication 3, **caractérisé en ce que** les saillies (36) en forme de nervures sont conçues de manière pivotante.

5. Siège de véhicule selon la revendication 3 ou 4, **caractérisé en ce que** es saillies (36) en forme de nervures comprennent un élément de nervure (36a) et un élément de tête (36b).

6. Siège de véhicule selon l'une des revendications précédentes, **caractérisé en ce que** le châssis de fixation (4) comprend des trous de passage (23a) afin d'y emboîter des éléments de type bouchon (30) et/ou des éléments de types clips (32) sur un côté arrière de l'élément de rembourrage arrière (5, 16) et d'introduire, dans des évidements (28, 33), situés à l'arrière et en forme de trous de serrures, du châssis de base (7), pour un blocage de l'élément de rembourrage arrière (5, 16) sur le châssis de base (7).

7. Siège de véhicule selon l'une des revendications 2 à 6, **caractérisé en ce que** le châssis de fixation (4) comprend, entre des portions (17a, 17b), disposées à gauche et à droite, de la partie de châssis externe (17a-c), au moins une nervure transversale (18, 19 20) relié à celle-ci au niveau de son extrémité.

8. Siège de véhicule selon l'une des revendications 2 à 7, **caractérisé en ce que** la partie de châssis externe (17a-c) comprend, au moins au niveau des portions (17a, 17b), disposées à gauche et à droite, des portions amovibles (22a, 22b), afin de fixer des éléments de blocage pour loger des pièces à monter ultérieurement, comme des accoudoirs (11), dans le châssis de fixation (4) et les fixer au châssis de base (7).

9. Siège de véhicule selon l'une des revendications précédentes, **caractérisé en ce que** le châssis de fixation (4) est constitué de matière plastique.
